# EUROPÄISCHE PATENTSCHRIFT

(11) **EP 3 247 589 B1**
(45) Veröffentlichungstag und Bekanntmachung des Hinweises auf die Patenterteilung: **13.02.2019**
(21) Anmeldenummer: 15817817.8
(22) Anmeldetag: 18.12.2015
(51) Int. Cl.: B60P 7/14, B60P 7/08

(54) **TRANSPORTFAHRZEUG**
TRANSPORT VEHICLE
VÉHICULE DE TRANSPORT

(30) Priorität: 22.01.2015 DE 202015100292 U
(43) Veröffentlichungstag der Anmeldung: 29.11.2017
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Nunnenkamp, Jörg
(86) Internationale Anmeldenummer: PCT/EP2015/080590
(87) Internationale Veröffentlichungsnummer: WO 2016/116235

(56) Entgegenhaltungen:
- DE-T2- 69 701 508
- US-A- 4 161 145
- US-A1- 2011 211 930
- US-A1- 2013 034 401

## Beschreibung

Die Erfindung betrifft ein Transportfahrzeug, insbesondere einen LKW-Auflieger, mit einem von Bordwänden, einer Transportfläche sowie gegebenenfalls einer Dachfläche begrenzten Laderaum, wobei zumindest eine Bordwand ganz oder teilweise ein flächiges Längs-Sicherungsmittel aufweist, wobei ferner zusätzlich ein oder mehrere flexible Quer-Sicherungsmittel zur Segmentierung der Transportfläche in Längsrichtung vorgesehen sind, und wobei das Quer-Sicherungsmittel mit zumindest einer Randseite an das Längs-Sicherungsmittel angeschlossen ist.

Üblicherweise werden Transportfahrzeuge und insbesondere LKW-Auflieger heutzutage ohne festen Aufbau realisiert und weisen als Bordwand in der Regel sogenannte Rungen und Einstecklatten auf. Die Rungen sind seitlich an die Transportfläche angeschlossen, wohingegen die Einstecklatten zwischen den Rungen festgelegt werden. Bei einem Transportfahrzeug entsprechend der WO 2013/164 450 A1 fungiert das flächige Längs-Sicherungsmittel als gleichsam Bordwandersatz und ist zu diesem Zweck als Sicherungsnetz aus sich kreuzenden Gurtbändern aufgebaut.

Bei voluminösen Ladegütern auf der Transportfläche und/oder beim Verrutschen der Ladegüter kann es dazu kommen, dass auf eine oder mehrere Bordwände seitliche Kräfte von der Ladung ausgeübt werden. Das führt u.a. dazu, dass die betreffende Bordwand nach außen hin "ausbeult" oder im schlimmsten Fall sogar eine oder mehrere der Einstecklatten zwischen den Rungen verbogen werden, brechen etc. Das an dieser Stelle eingesetzte flächige Längs-Sicherungsmittel als gleichsam Bordwandersatz verhindert im Rahmen der WO 2013/164 450 A1 solche Beschädigungen in der Regel zuverlässig. Allerdings werden "Ausbeulungen" nach wie vor beobachtet.
Das gilt auch für den Fall, dass eine flexible Wand aus plastifiziertem Leinen zum Einsatz kommt, die mit einem Gitter aus vertikalen und horizontalen Bändern ausgerüstet ist und in der DE 697 01 508 T2 beschrieben wird. Zwar kann die flexible Wand grundsätzlich eine Bordwand bei einem Transportfahrzeug ersetzen. Die zuvor angesprochene Problematik wird jedoch nicht beherrscht.

Daneben beschreibt die EP 1 857 323 B1 einen Aufbau für eine Ladefläche eines Transportfahrzeuges. Dabei wird mit einem Sperrbalken gearbeitet, der sich quer zur Längsrichtung der Ladefläche erstreckt. Zusätzlich ist eine Diagonalverspannung für den Sperrbalken vorgesehen. Dadurch erfährt der Sperrbalken zwar eine einwandfreie Fixierung, allerdings können flexible Bordwände nach wie vor unkontrolliert verformt werden. Das ist nicht nur unter Sicherheitsaspekten problematisch, sondern führt beispielsweise bei einer Verkehrskontrolle wegen oftmals Überschreiten der maximal zulässigen Fahrzeuggesamtbreite unmittelbar dazu, dass das betreffende Transportfahrzeug stillgelegt wird.
Beim gattungsbildenden Stand der Technik nach der US 2013/0034401 A1 sind an beiden sich gegenüberliegenden Bordwänden eines als Pick-up ausgelegten Transportfahrzeuges Längsgurte festgelegt. Die Längsgurte verfügen über eingeschlaufte O-Ringe in ihrer Längserstreckung. In die O-Ringe können Haken von Quer-Sicherungsmitteln zur Ladungssicherung eingehängt werden. Dadurch lässt sich eine Quersegmentierung der Transportfläche prinzipiell umsetzen.

In der US 2011/0211930 A1 wird ein Transportfahrzeug beschrieben. Auch in diesem Fall sind Längsgurte an jeweiligen Bordwänden festgelegt, die Öffnungen in regelmäßigen Abständen aufweisen. Dadurch lässt sich ein Quer-Sicherungsmittel flexibel hieran festlegen.

Der schließlich noch zu berücksichtigende Stand der Technik entsprechend der US 4 161 145 beschäftigt sich mit einem Transportfahrzeug bzw. einem hierauf befindlichen Lagerbehälter. Im Innern sind verschiedene Kabel in Längsrichtung gespannt, an denen ein Sicherungsnetz in Querrichtung variabel festgelegt werden kann.
Der Erfindung liegt das technische Problem zugrunde, ein derartiges Transportfahrzeug so weiter zu entwickeln, dass unter Beibehaltung der zumindest teilweisen Flexibilität wenigstens einer Bordwand ein Ausbeulen und damit verbunden das mögliche Überschreiten der zulässigen Gesamtbreite zuverlässig verhindert wird.
Zur Lösung dieser technischen Problemstellung ist ein gattungsgemäßes Transportfahrzeug im Rahmen der Erfindung dadurch gekennzeichnet, dass zumindest eine Bordwand über ihre gesamte Länge gesehen mit mehreren Längs-Sicherungsmitteln als jeweils Bordwandersatz ausgerüstet ist.

Um die einzelnen Längs-Sicherungsmittel zu fixieren, werden diese im Allgemeinen zwischen jeweils randseitig der Ladefläche vorgesehenen Rungen festgelegt. Diese Rungen stehen typischerweise vertikal im Vergleich zu der Ladefläche auf, so dass sie als gleichsam Vertikalstangen für die Befestigung und Festlegung der mehreren Längs-Sicherungsmittel fungieren können.

Eine besonders funktionell überzeugende Variante ist dadurch gekennzeichnet, dass die gesamten Bordwände oder zumindest die gesamten seitlichen Bordwände aus den flächigen Längs-Sicherungsmitteln aufgebaut sind. D.h., in diesem Fall ersetzen die flächigen Längs-Sicherungsmittel komplett die betreffende (seitliche) Bordwand. Dabei kann grundsätzlich mit einem durchgängigen flächigen Längs-Sicherungsmittel als Bordwandersatz gearbeitet werden. Im Regelfall kommen jedoch mehrere flächige Längs-Sicherungsmittel zum Einsatz, die zwischen den an der jeweiligen Bordwand vorgesehenen Rungen festgelegt und typischerweise auch zwischen den Rungen gespannt werden.

In Verbindung mit dem einen oder den mehreren flexiblen Quer-Sicherungsmitteln wird insgesamt ein Aufbau für die Transportfläche eines Transportfahrzeuges zur Verfügung gestellt, der nicht nur die Ladung einwandfrei auf der Transportfläche hält und vor einem Verrutschen sichert, sondern sich auch flexibel entfernen lässt. Auch andere Konstellationen oder Anordnungen sind problemlos denkbar, indem beispielsweise das flexible Quer-Sicherungsmittel an einer anderen Stelle angebracht wird.

Die Erfindung kombiniert also zum ersten Mal bei einem Transportfahrzeug ein flächiges Längs-Sicherungsmittel mit einem flexiblen Quer-Sicherungsmittel. Das flächige Längs-Sicherungsmittel fungiert dabei typischerweise ganz oder teilweise als Ersatz zumindest einer Bordwand. Demgegenüber kommt dem flexiblen Quer-Sicherungsmittel die Funktion zu, die Transportfläche zu segmentieren, folglich in verschiedene und selbstverständlich veränderbare Abteilungen in der Längsrichtung zu unterteilen. Dadurch wird zugleich eine zuverlässige Ladungssicherung erreicht, weil mit Hilfe des einen oder der mehreren flexiblen Quer-Sicherungsmittel verhindert wird, dass auf der Transportfläche befindliche Ladung verrutschen kann, umkippt etc.

D.h., bei dem einen oder den mehreren flexiblen Quer-Sicherungsmitteln handelt es sich um eine oder mehrere Ladungssicherungen, die durch die Segmentierung und folglich Querteilung der Transportfläche dafür sorgen, dass die darauf befindliche Ladung nicht verrutscht und sicher gehalten wird. Hierfür sorgt letztlich auch die zumindest eine Bordwand, welche über ihre gesamte Länge gesehen mit den mehreren Längs-Sicherungsmittels als jeweils Bordwandersatz ausgerüstet ist.

Um an dieser Stelle ein "Ausbeulen" des flächigen Längs-Sicherungsmittels zuverlässig zu verhindern, ist das flexible Quer-Sicherungsmittel mit zumindest einer Randseite an das Längs-Sicherungsmittel angeschlossen. Dadurch kann über das Quer-Sicherungsmittel ein Zug auf das flächige Längs-Sicherungsmittel ausgeübt werden, und zwar vorzugsweise in Richtung auf eine Mittellinie der Transportfläche. Dem zuvor beschriebenen Effekt des Ausbeulens wird auf diese Weise zuverlässig entgegengewirkt.

Gleichzeitig wird insgesamt ein Transportfahrzeug zur Verfügung gestellt, dessen Aufbau besonders flexibel gestaltet ist und zugleich die Ladung einwandfrei sichert. Tatsächlich kann nämlich das flächige Längs-Sicherungsmittel beispielsweise relativ schnell und unkompliziert entfernt werden, so dass die hiermit ausgerüstete Bordwand ganz oder zumindest teilweise für beispielsweise ein Entladen der auf der Transportfläche befindlichen Ladung zugänglich wird. Zugleich wird die mit dem flächigen Längs-Sicherungsmittel ausgerüstete Bordwand zusätzlich im Hinblick auf etwaige Querauswölbungen durch verrutschende Ladung gesichert, weil an dieser Stelle das flexible Quer-Sicherungsmittel eine entsprechende Kraft in Gegenrichtung, d.h. in Richtung auf die Mittellinie der Transportfläche, auf das flächige Längs-Sicherungsmittel ausübt. Hierin sind die wesentlichen Vorteile zu sehen.

Nach vorteilhafter Ausgestaltung handelt es sich bei dem Quer-Sicherungsmittel um wenigstens ein Gurtband, ein flächiges Sicherungsmittel oder eine Kombination beider vorgenannter Elemente. D.h., das Quer-Sicherungsmittel kann im einfachsten Fall als ein (einziges) Gurtband ausgebildet sein, welches an das Längs-Sicherungsmittel einerseits und beispielsweise an die Transportfläche oder eine gegenüberliegende Bordwand andererseits angeschlossen ist. Dadurch kann mit Hilfe des Gurtbandes im Beispielfall die gewünschte Kraft auf das Längs-Sicherungsmittel in Richtung der Mittellinie der Transportfläche ausgeübt werden.

Grundsätzlich können auch beispielsweise zwei Gurtbänder als Quer-Sicherungsmittel zum Einsatz kommen. Dabei sind Varianten derart denkbar, dass die beiden Gurtbänder parallel zueinander zwischen sich gegenüberliegenden Bordwänden verspannt werden. Es ist aber auch möglich und denkbar, dass die beiden Gurtbänder eine Diagonal-Verzurrung bilden, wie sie vergleichbar im einleitend bereits in Bezug genommenen Stand der Technik nach der EP 1 857 323 B1 prinzipiell beschrieben worden ist. Da im Unterschied dazu der dortige Sperrbalken fehlt, kann das Quer-Sicherungsmittel bzw. können die beiden Gurtbänder im Beispielfall wie gewünscht eine Kraft in Richtung auf die Mittellinie der Transportfläche auf das Längs-Sicherungsmittel ausüben.

Selbstverständlich sind zur Realisierung des Quer-Sicherungsmittels auch Kombinationen aus wenigstens einem Gurtband und einem flächigen Sicherungsmittel denkbar. Bei dem flächigen Sicherungsmittel kann es sich in diesem Kontext prinzipiell um eine Plane, eine Folie etc. handeln. Ganz besonders bevorzugt ist es, wenn das flächige Sicherungsmittel als Sicherungsnetz aus sich kreuzenden Gurtbändern aufgebaut ist.

Auch das flächige Längs-Sicherungsmittel ist vorteilhaft als Sicherungsnetz aus sich kreuzenden Gurtbändern ausgelegt. Ein oder mehrere Sicherungsnetze können einerseits als ganzer oder teilweiser Bordwandersatz bei dem erfindungsgemäßen Transportfahrzeug ebenso zum Einsatz kommen wie andererseits als Quer-Sicherungsmittel zur Segmentierung der Transportfläche in Längsrichtung. D.h., die einen oder mehreren Sicherungsnetze lassen sich flexibel einsetzen und kombinieren.

Hierzu trägt ergänzend der Umstand bei, dass nach bevorzugter Ausführungsform das Quer-Sicherungsmittel jeweils an Kreuzungspunkten der Gurtbänder festgelegt ist. Meistens wird das Quer-Sicherungsmittel lösbar an den fraglichen Kreuzungspunkten der Gurtbänder fixiert. Bei den Kreuzungspunkten der Gurtbänder handelt es sich um die Kreuzungspunkte, welche sich automatisch dann einstellen, wenn das Längs-Sicherungsmittel als Sicherungsnetz aus den sich kreuzenden Gurtbändern aufgebaut ist.

Die Kreuzungspunkte der Gurtbänder verfügen in diesem Zusammenhang über eine besondere hohe Stabilität, so dass sich die Festlegung des Quer-Sicherungsmittels an den betreffenden Kreuzungspunkten empfiehlt. Tatsächlich können die Gurtbänder in den Kreuzungspunkten miteinander vernäht oder sonst wie fest verbunden sein. Es ist aber auch möglich, dass die Gurtbänder in den Kreuzungspunkten durch ineinandergreifende sowie jeweils gurteigene Fäden miteinander gekoppelt sind, wie dies im Rahmen der einleitend bereits in Bezug genommenen WO 2013/164 450 A1 im Detail beschrieben ist. Jedenfalls weisen die Kreuzungspunkte des als Sicherungsnetz aus sich kreuzenden Gurtbändern ausgebildeten flächigen Längs-Sicherungsmittels die notwendige Stabilität auf, um gleichsam als Ankerpunkte für das hieran lösbar festgelegte Quer-Sicherungsmittel fungieren zu können.

Zu diesem Zweck ist der jeweilige Kreuzungspunkt vorteilhaft mit einer Aufnahme für ein darin eingreifendes Anschlagmittel am Quer-Sicherungsmittel ausgerüstet. Bei der Aufnahme handelt es sich vorteilhaft um eine Lochaufnahme und insbesondere Schlüsselloch-Aufnahme. Die Aufnahme kann dabei mit dem Kreuzungspunkt derart verbunden und gekoppelt werden, dass die Aufnahme zusammen mit den sich kreuzenden Gurtbändern an dem betreffenden Kreuzungspunkt festgelegt wird und diesen definiert. Das kann durch Vernähen der Aufnahme mit den betreffenden Gutbändern oder durch Rückgriff auf die zuvor bereits angesprochenen guteigenen Fäden erfolgen. Selbstverständlich liegen auch andere Möglichkeiten der Verbindung der Aufnahme mit dem fraglichen Kreuzungspunkt im Rahmen der Erfindung und werden abgedeckt.

Das Quer-Sicherungsmittel wird typischerweise zwischen zwei gegenüberliegenden Bordwänden gespannt. Dabei ist erfindungsgemäß zumindest eine dieser beiden Bordwände mit wenigstens einem flächigen Längs-Sicherungsmittel ausgerüstet, an welches das Quer-Sicherungsmittel mit der zumindest einen Randseite angeschlossen ist. Dadurch, dass das Quer-Sicherungsmittel zwischen den gegenüberliegenden Bordwänden gespannt wird, wird zuverlässig dem zuvor bereits angesprochenen und zu vermeidenden "Ausbeulen" der einen oder der beiden Bordwände entgegengewirkt.

Um die an dieser Stelle erforderliche Spannung zu erzeugen, ist das Quer-Sicherungsmittel mit wenigstens einem Zurrgurt ausgerüstet. Dieser Zurrgurt kann beispielsweise in Horizontalrichtung oder auch in Schrägrichtung verlaufen und sorgt dafür, dass mit seiner Hilfe das Quer-Sicherungsmittel die gegenüberliegenden Bordwände gegeneinander verspannt. Selbstverständlich liegt es auch im Rahmen der Erfindung, den Zurrgurt in Diagonalrichtung verlaufen zu lassen. Ebenso können zwei Zurrgurte in diesem Kontext realisiert werden, die für die einleitend bereits beschriebene Diagonalverzurrung sorgen.

Dabei ist es ergänzend möglich, dass nicht nur die Zurrgurte alleine vorgesehen sind, sondern mit einem Sicherungsnetz aus den sich kreuzenden Gurten kombiniert werden. Sämtliche diesbezüglichen Varianten werden von der Erfindung mit abgedeckt.

Im Ergebnis wird ein Transportfahrzeug zur Verfügung gestellt, welches im Rahmen der besonders bevorzugten Variante komplett auf Einstecklatten verzichten kann und zusätzlich mit einer einwandfreien und flexiblen Ladungssicherung ausgerüstet ist. Die einzelnen flächigen Längs-Sicherungsmittel können prinzipiell mit einer Folie oder Plane kombiniert werden, wie dies in der DE 697 01 508 T2 beschrieben wird. Es ist aber auch möglich, ergänzend zu der entsprechend aufgebauten Bordwand aus dem einen oder den mehreren Sicherungsnetzen eine zusätzliche Plane und insbesondere Schiebeplane vorzusehen. Mit Hilfe dieser Plane kann das fragliche Längs-Sicherungsmittel in der Art einer Gardine oder ähnlich einem Seitenvorhang nach außen hin abgedeckt und insgesamt die zugehörige Bordwand verschlossen werden. Dadurch wird die auf der Transportfläche befindliche Ladung vor Witterungseinflüssen geschützt. Das gilt selbstverständlich nur als Option und ist keinesfalls zwingend.

In jedem Fall zeichnet sich das erfindungsgemäße Transportfahrzeug durch einen flexiblen und sicheren Aufbau aus, der zugleich etwaigen Ausbeulungen einer oder mehrerer Bordwände entgegenwirkt. Dadurch lassen sich auch bisher äußerst schwierig zu transportierende Ladegüter wie beispielsweise Reifen oder Reifenstapel einwandfrei transportieren. Bei solchen Ladegütern besteht nämlich die Gefahr, dass diese beim Transport verrutschen und sich gegen oder an die beiden Bordwände legen. Derartigen Effekten wird erfindungsgemäß durch das wenigstens eine zusätzliche Quer-Sicherungsmittel wirksam begegnet. Hierin sind die wesentlichen Vorteile zu sehen.

Im Folgenden wird die Erfindung anhand einer lediglich ein Ausführungsbeispiel darstellenden Zeichnung näher erläutert; es zeigen:

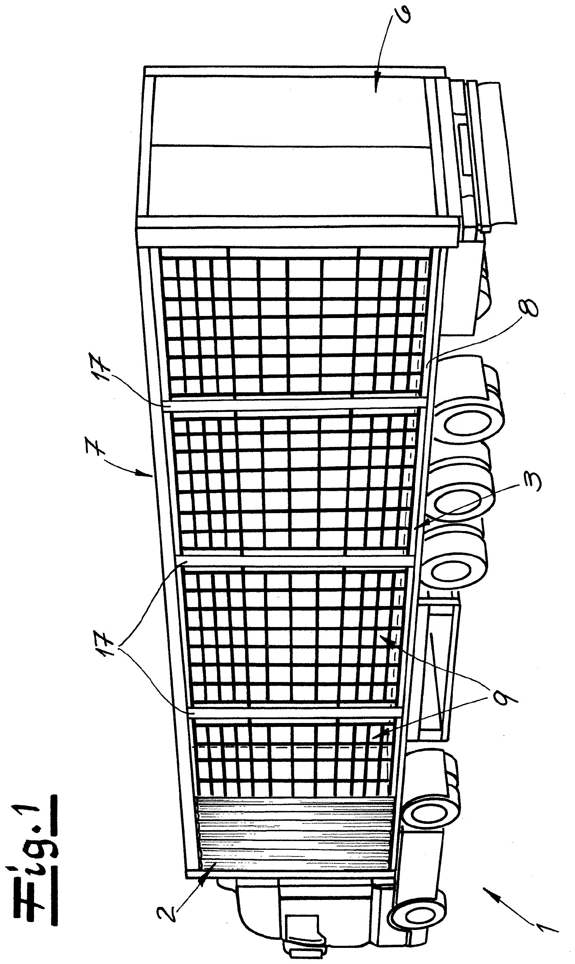

- Fig. 1: das erfindungsgemäße Transportfahrzeug perspektivisch,
- Fig. 2: einen Blick auf das Innere der Transportfläche und
- Fig. 3: Details aus der Fig. 2.

In den Figuren ist ein Transportfahrzeug dargestellt, bei dem es sich im Ausführungsbeispiel und nicht einschränkend um einen LKW-Auflieger 1 handelt. Im Detail wird ein sogenannter Schiebeplanen-Auflieger 1 gezeigt, also ein solcher, der mit einer seitlichen Schiebeplane 2 an seinen seitlichen Bordwänden 3, 4 ausgerüstet ist. Neben den beiden seitlichen Bordwänden 3, 4 erkennt man noch eine Stirnwand 5, eine Rückwand 6 und eine Dachfläche 7, die allerdings optional auch weggelassen werden kann, wenn es sich um einen offenen LKW-Auflieger 1 handelt.

Zusammen mit einer Transportfläche 8 begrenzen die beiden seitlichen Bordwände 3, 4, die Stirnwand 5, die Rückwand 6 und schließlich die optionale Dachfläche 7, einen Laderaum bzw. Transportraum 3 bis 8, der im Ausführungsbeispiel geschlossen ausgebildet ist und zur Aufnahme von Ladegütern auf der Transportfläche 8 dient. - Grundsätzlich kann es sich bei dem erfindungsgemäßen Transportfahrzeug auch um ein Schienenfahrzeug und folglich einen Waggon handeln. Das ist jedoch nicht dargestellt.

Man erkennt, dass im Beispielfall die linke Seitenwand 3 ganz oder teilweise ein flächiges Längs-Sicherungsmittel 9 aufweist. Im Ausführungsbeispiel und nicht einschränkend sind beide seitlichen Bordwände 3, 4 über ihre gesamte Länge gesehen aus einem bzw. mehreren dieser flächigen Längs-Sicherungsmittel 9 aufgebaut. Das gilt selbstverständlich nur für das Ausführungsbeispiel und ist keinesfalls zwingend.

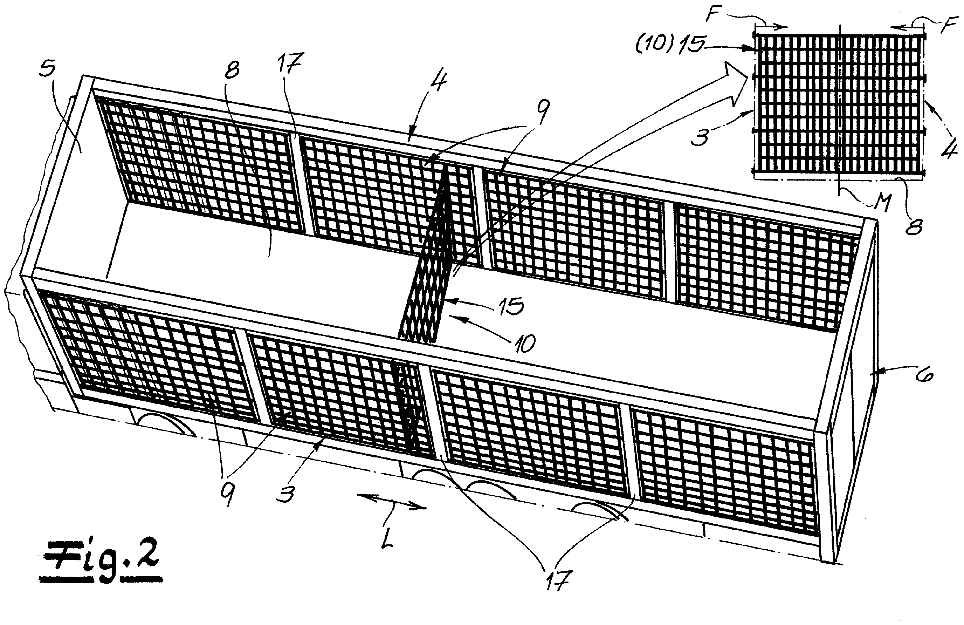

Neben diesem einen bzw. den mehreren flächigen Längs-Sicherungsmitteln 9 erkennt man insbesondere in der Innenansicht nach der Fig. 2 zusätzlich noch ein oder mehrere flexible Quer-Sicherungsmittel 10. Mit Hilfe des einen bzw. der mehreren flexiblen Quer-Sicherungsmitteln 10 wird die Transportfläche 8 in der in Fig. 2 angedeuteten Längsrichtung L gesehen segmentiert. Zu diesem Zweck ist das fragliche Quer-Sicherungsmittel 10 mit zumindest einer Randseite an das Längs-Sicherungsmittel 9 angeschlossen.

Im Ausführungsbeispiel nach der Fig. 2 ist die Auslegung so getroffen, dass die beiden seitlichen Bordwände 3, 4 komplett durch ein oder mehrere Längs-Sicherungsmittel 9 gebildet werden, die demzufolge als Bordwandersatz fungieren. Die einzelnen Längs-Sicherungsmittel 9 sind vorliegend als Sicherungsnetze 9 aus sich kreuzenden Längsgurten 9a und Quergurten 9b aufgebaut. Bei den Gurten 9a, 9b handelt es sich vorteilhaft um Kunststoffgurte aus insbesondere gewebten Polyesterfäden. Die Gurte 9a, 9b schneiden sich in Kreuzungspunkten 11.

Im Bereich dieser Kreuzungspunkte 11 mögen die Gurte 9a, 9b miteinander verbunden sein, um die nötige Festigkeit des Sicherungsnetzes bzw. Längs-Sicherungsmittels 9 zur Verfügung zu stellen. An dieser Stelle haben sich bekannte Verbindungstechniken wie beispielsweise ein Vernähen der Gurte 9a, 9b als günstig erwiesen. Es kann aber auch so vorgegangen werden, dass die Gurtbänder 9a, 9b im jeweiligen Kreuzungspunkt 11 durch ineinandergreifende sowie jeweils gurteigene Fäden miteinander gekoppelt sind. Zusätzlich kann in diesen Verbindungsprozess der Gurtbänder 9a, 9b im Bereich der Kreuzungspunkte 11 eine Aufnahme 12 mit einbezogen werden, deren Bedeutung nachfolgend noch näher erläutert wird.

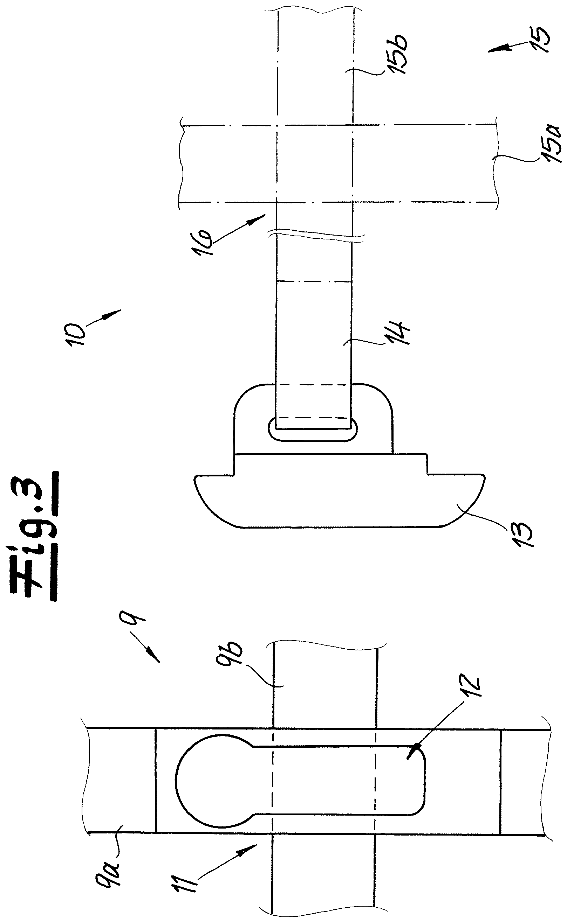

Bei der Aufnahme 12 handelt es sich im Ausführungsbeispiel um eine Lochaufnahme und insbesondere eine Schlüsselloch-Aufnahme 12, wie die Darstellung nach der Fig. 3 deutlich macht. In die Aufnahme bzw. Schlüssellochaufnahme 12 lässt sich ein Anschlagmittel 13 lösbar einhängen. Bei dem Anschlagmittel 13 handelt es sich beispielsweise um einen Adapter aus Kunststoff. Das Anschlagmittel 13 ist an einem oder beiden (vertikalen) Rändern des Quer-Sicherungsmittels 10 vorgesehen und sorgt dafür, dass das Quer-Sicherungsmittel 10 mit zumindest einer Randseite an das Längs-Sicherungsmittel 9 angeschlossen ist und auch angeschlossen werden kann.

Das flexible Quer-Sicherungsmittel 10 kann sich aus mehreren Gurtbändern 14 zusammensetzen bzw. solche Gurtbänder 14 aufweisen. Im Ausführungsbeispiel ist das Quer-Sicherungsmittel 10 als Kombination aus mehreren randseitigen Gurtbändern 14 und einem demgegenüber mittigen flächigen Sicherungsmittel 15 aufgebaut, bei dem es sich im Ausführungsbeispiel ebenfalls um ein Sicherungsnetz 15 aus sich kreuzenden Längsgurten 15a und Quergurten 15b handelt. Wie das Sicherungsnetz 9, so sind auch in diesem Fall die Gurte 15a, 15b als Kunststoffgurte aus insbesondere gewebten Polyesterfäden aufgebaut. Außerdem werden die einzelnen Gurte 15a, 15b in korrespondierenden Kreuzungspunkten 16 miteinander gekoppelt. Das kann erneut durch Vernähen oder gurteigene Fäden erfolgen, wie dies bereits mit Bezug zum Sicherungsnetz 9 beschrieben worden ist. Der Aufbau der beiden Sicherungsnetze 9 bzw. 15 ist also vergleichbar. Es können sogar gleiche Sicherungsnetze 9, 15 zum Einsatz kommen.

Mit Hilfe der randseitig des Sicherungsnetzes 15 vorgesehenen bzw. dort angeschlossenen Gurtbänder 14 wird das Quer-Sicherungsmittel 10 bzw. das Sicherungsnetz 15 an den sich gegenüberliegenden seitlichen Bordwänden 3, 4 festgelegt. Demgegenüber sind die Stirnwand 5 und auch die Rückwand 6 meistens massiv, beispielsweise aus Aluminium, Holz oder einem anderen plattenförmigen Werkstoff, aufgebaut.

Wie bereits erläutert, lässt sich das Quer-Sicherungsmittel 10 jeweils an den Kreuzungspunkten 11 der Gurtbänder 9a, 9b der die jeweils seitlichen Bordwände 3, 4 bildenden Sicherungsnetze 9 festlegen. Die Festlegung erfolgt dabei lösbar, weil bei diesem Vorgang die Anschlagmittel bzw. Kunststoffadapter 13 des Quer-Sicherungsmittels 10 in die am zugehörigen Kreuzungspunkt 11 festgelegten Aufnahmen und insbesondere Schlüsselloch-Aufnahmen 12 des Sicherungsnetzes 9 lösbar eingreifen.

Nach Einhängen des Quer-Sicherungsmittels 10 wird dieses typischerweise zwischen den sich gegenüberliegenden Bordwänden 3, 4 gespannt. Dadurch werden jeweils in Richtung auf eine in Längsrichtung L verlaufende Mittellinie M der Transportfläche 8 gerichtete Kräfte F ausgeübt, wie dies entsprechende Pfeile in der Fig. 2 andeuten. Diese jeweils auf die Mittellinie M der Transportfläche 8 gerichteten Kräfte F sorgen dafür, dass die beiden Bordwände 3, 4 miteinander verspannt werden. Zugleich wird hierdurch ein etwaiges "Ausbeulen" der Bordwände 3, 4 durch beispielsweise verrutschende Ladung verhindert.

Um die erforderliche Spannung des Quer-Sicherungsmittels 10 erzielen zu können, ist das Quer-Sicherungsmittel 10 mit wenigstens einem Zurrgurt 14 ausgerüstet. Tatsächlich sind an dieser Stelle die jeweiligen und randseitig des Sicherungsnetzes 15 an dieses angeschlossenen Gurtbänder 14 zumindest teilweise als entsprechende Zurrgurte 14 ausgelegt, können also gespannt werden und für die gegenseitige Verspannung der Bordwände 3, 4 sorgen.

Wie bereits erläutert, sind im Ausführungsbeispiel und nicht einschränkend die beiden seitlichen Bordwände 3, 4 jeweils durchgängig in der Längsrichtung L mit einem oder mehreren Längs-Sicherungsmitteln 9 respektive entsprechenden Sicherungsnetzen 9 ausgerüstet und aufgebaut. Tatsächlich erkennt man anhand der Fig. 2, dass in der fraglichen Längsrichtung L an der betreffenden Seitenwand 3, 4 mehrere in der Längsrichtung L angeordnete und an jeweilige Rungen 17 angeschlossene Längs-Sicherungsmittel respektive Sicherungsnetze 9 realisiert sind. Die Sicherungsnetze 9 können dabei an den fraglichen Rungen 17 vergleichbar und ebenfalls lösbar festgelegt werden, wie dies für das Quer-Sicherungsmittel 10 respektive das dortige Sicherungsnetz 15 gilt. D.h., auch im Fall der Längs-Sicherungsmittel bzw. Sicherungsnetze 9 kann mit jeweils randseitig vorgesehenen Anschlagmitteln 13 gearbeitet werden, die in zugehörige Aufnahmen 12 eingreifen, die in diesem Fall allerdings an den betreffenden Rungen 17 ausgebildet sind. Das gilt selbstverständlich nicht zwingend und nur beispielhaft.

Die fraglichen Rungen 17 sind jeweils randseitig der Ladefläche 8 vorgesehen und hieran festgelegt. Außerdem erstrecken sich die Rungen 17 im Allgemeinen vertikal im Vergleich zur demgegenüber horizontalen Ladefläche 8. Auf diese Weise wird insgesamt ein Aufbau für ein Transportfahrzeug zur Verfügung gestellt, welcher überwiegend aus Sicherungsnetzen 9 bzw. 15 aus jeweils sich kreuzenden Gurten 9a, 9b bzw. 15a, 15b aufgebaut ist. Dabei kann auf unterschiedliche oder sogar gleiche Sicherungsnetze 9, 15 zurückgegriffen werden. Auch die lösbare Anbringung der jeweiligen Sicherungsnetze 9, 15 ist vergleichbar, so dass der solchermaßen aufgebaute Transportraum bzw. Laderaum 3 bis 8 im Beispielfall problemlos und schnell geöffnet werden kann.

Zugleich ist der Transportraum 3 bis 8 mit flexiblen und besonders widerstandsfähigen Seitenwänden 3, 4 ausgerüstet, die etwaige verrutschende Ladung problemlos aufnehmen können. Durch die Verspannung der beiden seitlichen Bordwände 3, 4 mit Hilfe des Quer-Sicherungsmittels 10 wird darüber hinaus einem "Ausbeulen" der fraglichen Seitenwände 3, 4 entgegengewirkt. Hierin sind die wesentlichen Vorteile zu sehen.

## Patentansprüche

1. Transportfahrzeug, insbesondere LKW-Auflieger (1), mit einem von Bordwänden (3, 4, 5, 6), einer Transportfläche (8) sowie gegebenenfalls einer Dachfläche (7) begrenzten Laderaum (3 bis 8), wobei
- zumindest eine Bordwand (3, 4) ganz oder teilweise ein flächiges Längs-Sicherungsmittel (9) aufweist, wobei ferner
- zusätzlich ein oder mehrere flexible Quer-Sicherungsmittel (10) zur Segmentierung der Transportfläche (8) in Längsrichtung (L) vorgesehen sind, und wobei
- das Quer-Sicherungsmittel (10) mit zumindest einer Randseite an das Längs-Sicherungsmittel (9) angeschlossen ist,
**dadurch gekennzeichnet, dass**
- zumindest eine Bordwand (3, 4) über ihre gesamte Länge gesehen mit mehreren Längs-Sicherungsmitteln (9) als jeweils Bordwandersatz ausgerüstet ist.

2. Transportfahrzeug nach Anspruch 1, **dadurch gekennzeichnet, dass** das Quer-Sicherungsmittel (10) als wenigstens ein Gurtband (14), flächiges Sicherungsmittel (15) oder eine Kombination (14, 15) beider Elemente ausgebildet ist.

3. Transportfahrzeug nach Anspruch 1 oder 2, **dadurch gekennzeichnet, dass** das flächige Längs-Sicherungsmittel (9) als Sicherungsnetz (9) aus sich kreuzenden Gurtbändern (9a, 9b) aufgebaut ist.

4. Transportfahrzeug nach Anspruch 3, **dadurch gekennzeichnet, dass** das Quer-Sicherungsmittel (10) jeweils an Kreuzungspunkten (11) der Gurtbänder (9a, 9b) vorzugsweise lösbar festgelegt ist.

5. Transportfahrzeug nach Anspruch 4, **dadurch gekennzeichnet, dass** der jeweilige Kreuzungspunkt (11) mit einer Aufnahme (12) für ein darin eingreifendes Anschlagmittel (13) am Quer-Sicherungsmittel (10) ausgerüstet ist.

6. Transportfahrzeug nach einem der Ansprüche 1 bis 5, **dadurch gekennzeichnet, dass** das Quer-Sicherungsmittel (10) zwischen zwei gegenüberliegenden Bordwänden (3, 4) gespannt ist.

7. Transportfahrzeug nach einem der Ansprüche 1 bis 6, **dadurch gekennzeichnet, dass** das Quer-Sicherungsmittel (10) mit wenigstens einem Zurrgurt (14) ausgerüstet ist, welcher in Diagonalrichtung und/oder Horizontalrichtung verlaufend die gegenüberliegenden Bordwände (3, 4) gegeneinander verspannt.

8. Transportfahrzeug nach Anspruch einem der Ansprüche 1 bis 7, **dadurch gekennzeichnet, dass** die Längs-Sicherungsmittel (9) zwischen jeweils randseitig der Ladefläche (8) vorgesehenen Rungen (17) festgelegt sind.

9. Transportfahrzeug nach einem der Ansprüche 1 bis 8, **dadurch gekennzeichnet, dass** die gesamten seitlichen Bordwände (3, 4) aus den flächigen Längs-Sicherungsmitteln (9) als Bordwandersatz aufgebaut sind.

## Claims

1. Transport vehicle, in particular truck trailer (1) with a cargo area (3 to 8) defined by side walls (3, 4, 5, 6), a transporting surface (8) and possibly a roof surface (7), wherein
- at least one side wall (3, 4) fully or partially comprises a flat longitudinal securing means (9), wherein further
- additionally one or more flexible transverse securing means (10) is/are provided for segmenting the transporting surface (8) in the longitudinal direction (L), and wherein
- with at least one edge side the transverse securing means (10) is connected to the longitudinal securing means (9),
**characterised in that**
- seen over its entire length at least one side wall (3, 4) is equipped with several longitudinal securing means (9) each as a side wall replacement.

2. Transport vehicle according to claim 1 **characterised in** the transverse securing means (10) is designed as at least one strap (14), flat securing means (15) or a combination (14, 15) of both elements.

3. Transport vehicle according to claim 1 or 2 **characterised in that** the flat longitudinal securing means (9) is built up of a securing net (9) of intersecting straps (9a, 9b).

4. Transport vehicle according to claim 3 **characterised in that** in each case the transverse securing means (10) is preferably detatchably fixed at intersection points (11) of the straps (9a, 9b).

5. Transport vehicle according to claim 4 **characterised in that** the respective intersection point (11) is equipped with a holder (12) for a stop means (13) that engages in it on the transverse securing means (10).

6. Transport vehicle according to any one of claims 1 to 5 **characterised in that** the transverse securing means (10) is stretched between two opposite side walls (3, 4) .

7. Transport vehicle according to any one of claims 1 to 6 **characterised in that** the transverse securing means (10) is equipped with a least one lashing strap (14) which braces the opposite side walls (3, 4) with regard to each other in the diagonal and/or horizontal direction.

8. Transport vehicle according to any one of claims 1 to 7 **characterised in that** the longitudinal securing means (9) is fixed between stanchions (17) each provided on the edge side of the cargo area (8).

9. Transport vehicle according to any one of claims 1 to 8 **characterised in that** the entire lateral side walls (3, 4) are formed by the flat longitudinal securing means (9) as side wall replacements.

## Revendications

1. Véhicule de transport, notamment semi-remorque (1), comprenant un espace de chargement (3 à 8) délimité par des ridelles (3, 4, 5, 6), une surface de transport (8), ainsi que le cas échéant, une surface de fond supérieur (7), au moins une ridelle (3, 4) comportant en totalité ou en partie un moyen de sécurisation longitudinal (9) plan, par ailleurs en supplément étant prévus un ou plusieurs moyens de sécurisation transversaux (10) flexibles, destinés à segmenter la surface de transport (8) dans la direction longitudinale (L) et le moyen de sécurisation transversal (10) étant raccordé par au moins un côté de bordure sur le moyen de sécurisation longitudinal (9), **caractérisé en ce que**, vue sur la totalité de sa longueur, au moins une ridelle (3, 4) est équipée de plusieurs moyens de sécurisation longitudinaux (9), faisant office chacun de substitut de ridelle.

2. Véhicule de transport selon la revendication 1, **caractérisé en ce que** le moyen de sécurisation transversal (10) est conçu sous la forme d'au moins une sangle (14), un moyen de sécurisation plan (15) ou une association (14, 15) des deux éléments.

3. Véhicule de transport selon la revendication 1 ou 2, **caractérisé en ce que** le moyen de sécurisation longitudinal (9) plan est structuré sous la forme d'un filet de sécurisation (9) constitué de sangles (9a, 9b) qui se croisent.

4. Véhicule de transport selon la revendication 3, **caractérisé en ce que** le moyen de sécurisation transversal (10) est immobilisé, de préférence de manière amovible, chaque fois sur des points de croisement (11) des sangles (9a, 9b).

5. Véhicule de transport selon la revendication 4, **caractérisé en ce que** sur le moyen de sécurisation transversal (10), le point de croisement (11) respectif est équipé d'un logement (12) pour un moyen d'arrimage (13) qui s'y engage.

6. Véhicule de transport selon l'une quelconque des revendications 1 à 5, **caractérisé en ce que** le moyen de sécurisation transversal (10) est tendu entre deux ridelles (3, 4) opposées.

7. Véhicule de transport selon l'une quelconque des revendications 1 à 6, **caractérisé en ce que** le moyen de sécurisation transversal (10) est équipé d'au moins une sangle d'arrimage (14), qui en s'écoulant dans la direction diagonale et/ou dans la direction horizontale contraint l'une contre l'autre les ridelles (3, 4) opposées.

8. Véhicule de transport selon l'une quelconque des revendications 1 à 7, **caractérisé en ce que** le moyen de sécurisation longitudinal (9) est immobilisé entre des ranchers (17) prévus chacun du côté de la bordure de la surface de chargement (8).

9. Véhicule de transport selon l'une quelconque des revendications 1 à 8, **caractérisé en ce que** l'ensemble des ridelles (3, 4) sont structurées à partir des moyens de sécurisation longitudinaux (9) faisant office chacun de substitut de ridelle.
